# EUROPEAN PATENT APPLICATION

(11) **EP 4 325 607 A1**
(43) Date of publication of application: **21.02.2024**
(21) Application number: 22788138.0
(22) Date of filing: 11.04.2022
(51) Int. Cl.: H01M 8/04, H01M 8/0432, H01M 8/04701, H01M 8/10, H01M 8/12

(54) **EVALUATION DEVICE, EVALUATION METHOD, AND PROGRAM FOR EVALUATION DEVICE**

(30) Priority: 12.04.2021 JP 2021067325
(71) Applicant: HORIBA, Ltd., Kyoto-shi, Kyoto 601-8510 (JP)
(72) Inventor: ITAYA, Takahiro, Kyoto-shi, Kyoto 601-8510 (JP)
(74) Representative: Müller Hoffmann & Partner
(86) International application number: PCT/JP2022/017471
(87) International publication number: WO 2022/220213

(57) **Abstract**

Provided is an evaluation device 100 that evaluates performance of a predetermined object to be evaluated (W) by varying a temperature condition. The evaluation device 100 comprises a heating furnace 1 having a furnace inner space 1s that houses the object to be evaluated (W), a temperature adjusting mechanism (C) that adjusts a temperature of the object to be evaluated (W) or its surroundings by heating or cooling, a temperature acquisition unit 34 that acquires the temperatures of a plurality of locations of the object to be evaluated (W) or its surroundings, and a temperature adjusting mechanism control unit 35 that controls the temperature adjusting mechanism (C) to keep an absolute value of a temperature difference between the temperatures of a plurality of the locations acquired by the temperature acquisition unit 34 lower than or equal to a predetermined value.

## Description

### Field of the art

This invention relates to an evaluation device, an evaluation method and a program for an evaluation device for evaluating performance of an object to be evaluated such as a fuel cell.

### Background art

An evaluation device for electrical performance of an object to be evaluated such as a fuel cell by varying a temperature condition is known (for example, Patent document 1). In such the evaluation device, the fuel cell is housed in a heating furnace and heated to a predetermined test temperature, and an evaluation test is conducted at the test temperature. When the evaluation test is completed, the heating furnace is stopped to be heated and the fuel cell is removed from the heating furnace by a tester after the inside of the heating furnace has cooled sufficiently, and then a fuel cell to be evaluated next is housed in the heating furnace.

### Prior art document

### Patent document

Patent document 1: Japanese Unexamined Patent Application Publication No. 2019-200887

### Summary of invention

### Problems to be solved by the invention

In the above-mentioned evaluation test method, it takes about 80 minutes to raise a temperature of the fuel cell from a room temperature to the test temperature (for example, 800 °C) in the heating furnace. In addition, inside of the heating furnace is cooled down naturally after the evaluation test so that it takes about two days to exchange the fuel cell for the next fuel cell to be evaluated. This becomes a factor that worsens a test operation rate. To improve the test operation rate, it can be conceived that a cooling gas or the like is supplied to the heating furnace during descending the temperature, however, in this case, the temperature distribution in the heating furnace becomes uneven, and the temperature difference might cause cracks or other damage to the fuel cell. The same problem can be true for supplying a heating gas or the like to shorten the time required for heating up the fuel cell.

The present claimed invention is made in view of these problems, and a main object is to improve the operation rate of the evaluation test while suppressing damage to the object to be evaluated caused by temperature differences in the evaluation device that evaluates the performance of the object to be evaluated such as the fuel cell by varying temperature conditions.

### Means to solve the problems

More specifically, an evaluation device in accordance with this invention is for evaluating performance of a predetermined object to be evaluated by varying a temperature condition, and is characterized by comprising a heating furnace having a furnace inner space that houses the object to be evaluated, a temperature adjusting mechanism that adjusts a temperature of the object to be evaluated or its surroundings by heating or cooling, a temperature acquisition unit that acquires the temperatures of a plurality of locations in or around the object to be evaluated, and a temperature adjusting mechanism control unit that controls the temperature adjusting mechanism to keep an absolute value of a temperature difference between the temperatures of a plurality of the locations acquired by the temperature acquisition unit lower than or equal to a predetermined value.

In accordance with this arrangement, since the evaluation device comprises the temperature adjusting mechanism that adjusts the temperature of the object to be evaluated or its surroundings by heating or cooling, it is possible to shorten time required to raise the temperature and time required to drop the temperature by heating or cooling the object to be evaluated and its surroundings at a time of raising the temperature or dropping the temperature in the heating furnace so that the test operation rate can be improved. In addition, since the temperatures of several points in the object to be evaluated or its surroundings are acquired and the temperature adjusting mechanism is controlled so that the temperature difference does not become too wide, it is also possible to suppress damage to the object to be evaluated caused by the temperature difference in the heating furnace.

The evaluation device is preferably configured that the temperature adjusting mechanism control unit controls the temperature adjusting mechanism based on a temperature difference between the highest temperature and the lowest temperature of a plurality of the temperatures obtained by the temperature acquisition unit.

In accordance with this arrangement, it is possible to effectively suppress damage to the object to be evaluated due to the temperature difference in the heating furnace.

In addition, as a concrete embodiment of the evaluation device represented is that the temperature adjusting mechanism comprises an outlet port that supplies a temperature adjusting fluid that promotes heating or cooling of the object to be evaluated to the furnace inner space.

Furthermore, the evaluation device is preferably configured that the heating furnace comprises a heating element in the furnace inner space, and a direction of the outlet port can be set so that the temperature adjusting fluid is sprayed directly on the heating element.

In accordance with this arrangement, if the direction of the outlet port is set so that the temperature adjusting fluid is sprayed directly on the heating elements of the heating furnace, it is possible to efficiently cool the furnace inner space at a time of dropping the temperature. At a time of raising the temperature, if the temperature adjusting fluid whose temperature is higher than that of the heating element is directly sprayed on the heating element, it is possible to effectively apply heat to the furnace inner space.

If the temperature adjusting fluid whose temperature is lower than that of the object to be evaluated whose temperature is high is directly sprayed on the object to be evaluated at a time of dropping the temperature, a sudden temperature difference may occur on the surface of the object to be evaluated, resulting in cracks. As a result of this, it is preferable that the direction of the outlet port can be set so that the temperature adjusting fluid is not sprayed directly on the object to be evaluated housed in the furnace inner space. In accordance with this arrangement, it is possible to more effectively suppress damage to the object to be evaluated due to the temperature differences.

In addition, as a concrete embodiment of the evaluation device represented is that a temperature raising operation mode in which the furnace inner space is heated to raise the temperature in the furnace inner space is provided, and in the temperature raising operation mode, the temperature adjusting mechanism control unit controls the temperature adjusting mechanism to supply the temperature adjusting fluid whose temperature is higher than the temperature in the furnace inner space.

In accordance with this arrangement, it is possible to shorten time required to raise the time by promoting heating of the furnace inner space while preventing damage to the object to be evaluated caused by the temperature differences in the heating furnace in the temperature raising operation mode.

In addition, as a concrete embodiment of the evaluation device represented is that the evaluation device has a temperature dropping operation mode in which the furnace inner space is cooled and to drop the temperature in the furnace inner space, and in the temperature dropping operation mode, the temperature adjusting mechanism control unit controls the temperature adjusting mechanism to supply the temperature adjusting fluid whose temperature is lower than the temperature in the furnace inner space.

In accordance with this arrangement, it is possible to shorten time required to drop the temperature by promoting heating of the furnace inner space while preventing damage to the object to be evaluated caused by temperature differences in the heating furnace in the temperature dropping operation mode.

In addition, the evaluation device is preferably configured so that the heating furnace has an outside air intake port that can be open and close for taking outside air into the furnace inner space, and in the temperature dropping operation mode, when the temperature of the object to be evaluated falls below a predetermined set temperature, the outside air intake port is automatically opened to allow the outside air to be taken into the furnace inner space.

In accordance with this arrangement, it is possible to more effectively cool the furnace inner space at a time of dropping the temperature. In this case, if the set temperature when the outside air intake port is opened is set, for example, lower than or equal to the spontaneous combustion temperature of the object to be evaluated, it is possible to reduce the risk of ignition due to opening of the outside air intake port.

In addition, as a concrete embodiment of the object to be evaluated in the evaluation device represented is a fuel cell, a catalyst or a sensor.

In addition, an evaluation method of this invention is an evaluation method that evaluates an object to be evaluated by using an evaluation device that evaluates performance of the predetermined object to be evaluated by varying a temperature condition and that comprises a heating furnace having a furnace inner space to house the object to be evaluated and a temperature adjusting mechanism to heat or cool the object to be evaluated or its surroundings, and is characterized by that the temperatures of a plurality of locations in or around the object to be evaluated are acquired, and the temperature adjusting mechanism is controlled to keep an absolute value of a temperature difference between the acquired temperatures at a plurality of the locations lower than or equal to a predetermined value.

In addition, a program for evaluation device is a program for evaluation device that evaluates performance of a predetermined object to be evaluated by varying a temperature condition and that comprises a heating furnace having a furnace inner space to house the object to be evaluated and a temperature adjusting mechanism to adjust the object to be evaluated or its surroundings by heating or cooling the object to be evaluated or its surroundings, and is characterized by making a computer produce functions as a temperature acquisition unit that acquires the temperatures of a plurality of locations in or around the object to be evaluated, and a temperature adjusting mechanism control unit that controls the temperature adjusting mechanism to keep an absolute value of a temperature difference between the acquired temperatures at a plurality of the locations lower than or equal to a predetermined value.

In accordance with the above-mentioned evaluation method or the above-mentioned program for the evaluation device, it is possible to produce the same effect and operation as those of the above-mentioned evaluation device of this invention.

### Effect of the invention

In accordance with the invention having the above-mentioned arrangement, it is possible for the evaluation device that evaluates the performance of the object to be evaluated such as the fuel cell by varying the temperature conditions to improve the operation rate of the evaluation test while suppressing damage to the object to be evaluated caused by temperature differences.

### Brief description of the drawings

[Fig. 1] A diagram schematically showing an overall configuration of an evaluation device in accordance with one embodiment of this invention
[Fig. 2] A functional block diagram of a control unit of this embodiment
[Fig. 3] A diagram schematically showing an overall configuration of an evaluation device of another embodiment of this invention
[Fig. 4] A diagram schematically showing an overall structure of an evaluation device of a further different embodiment of this invention.
[Fig. 5] A diagram schematically showing an overall configuration of an evaluation device of a further different embodiment of this invention
[Fig. 6] A diagram schematically showing an overall configuration of an evaluation device of a further different embodiment of this invention with showing a cover unit in a sealed position
[Fig. 7] A diagram schematically showing an overall configuration of the evaluation device of the embodiment of this invention with showing the cover unit in an open position
[Fig. 8] A functional block diagram of a control unit of the embodiment of the invention.
[Fig. 9] A diagram schematically showing an overall configuration of an evaluation device of a further different embodiment of this invention
[Fig. 10] A graph explaining a cooling method of a temperature dropping operation mode of an evaluation device of a further different embodiment of this invention
[Fig. 11] A diagram schematically showing an overall configuration of an evaluation device of a further different embodiment of this invention
[Fig. 12] A diagram schematically showing an overall configuration of an evaluation device of a further different embodiment of this invention

### Best modes of embodying the invention

One embodiment of an evaluation device 100 of the present claimed invention is described below with reference to drawings.

The evaluation device 100 is for evaluating performance of a fuel cell as an object to be evaluated (W), and concretely for performing an evaluation test to evaluate battery performance of the fuel cell (W) by varying an environmental condition such as an ambient temperature. The battery performance of the fuel cell includes, for example, the voltage and the current at which the fuel cell can generate electricity and the electrical performance of the fuel cell such as the resistance value of the fuel cell, as well as those related to the electrical performance in case that the ambient environmental temperature is varied. In addition, the evaluation tests also include functionality tests to test whether the fuel cell can be remained functionally, such as not being damaged, in case that the ambient temperature is varied.

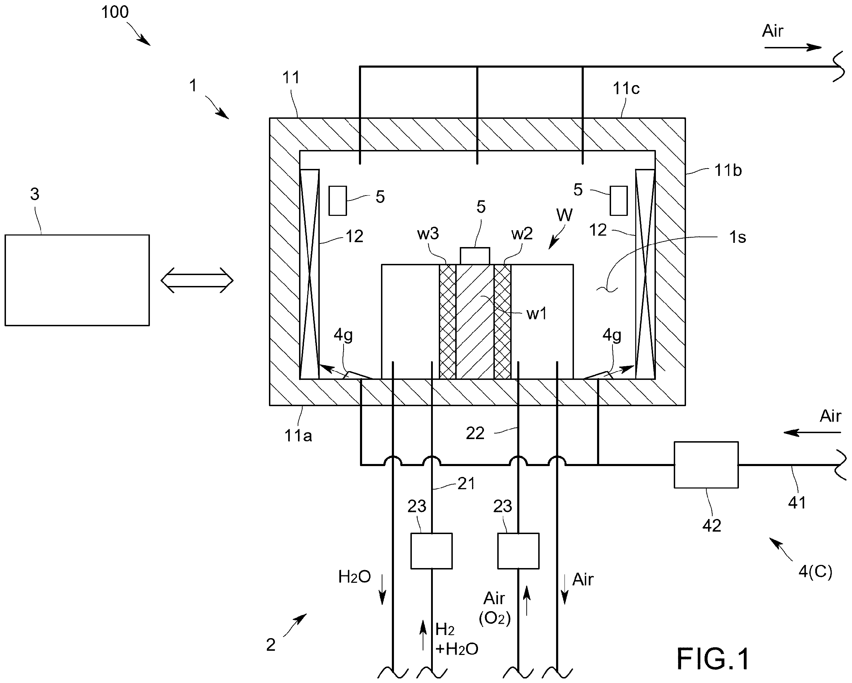

Concretely, the evaluation device 100, as shown in Fig. 1, comprises a heating furnace 1 having a furnace inner space 1s in which the fuel cell (W) is housed and heated, a gas supply system 2 for power generation that supplies gas for power generation to the fuel cell (W) and a control device 3. The evaluation device 100 is configured to be switchable between three operation modes by controlling the heating furnace 1s with the control device 3: a temperature raising operation mode in which the temperature of the furnace inner space 1s is raised, a temperature maintaining mode in which the temperature of the furnace inner space 1s is maintained at a predetermined set temperature (also referred to as a test temperature), and a temperature dropping operation mode in which the temperature of the furnace inner space 1s is dropped.

The fuel cell (W) as the object to be evaluated (W) is a solid oxide fuel cell (SOFC) consisting of a single cell comprising a solid electrolyte w1, an air electrode w2 (cathode) and a fuel electrode w3 (anode). The fuel cell system is not limited to the SOFC, and may also be other systems such as a polymer electrolyte fuel cell (PEFC), a phosphate fuel cell (PAFC), a molten carbonate fuel cell (MCFC), an alkaline electrolyte fuel cell (AFC), a direct fuel cell (DFC), or a biofuel cell (BFC).

The heating furnace 1 comprises a box-shaped furnace body 11 that forms a furnace inner space 1s for housing the fuel cell (W) and a heating element 12 that heats the furnace inner space 1s.

The furnace body 11 has a bottom wall 11a on which the fuel cell (W) is placed, a side wall 11b surrounding a side surface of the placed fuel cell (W) and a top wall 11c covering an upper part of the fuel cell (W). The inner surfaces of the bottom wall 11a, the side wall 11b and the top wall 11c form the furnace inner space 1s.

The heating element 12 applies heat to the furnace inner space 1s by being electrified and generating heat when the heating element 12 is supplied electrical power by a power circuit, not shown in drawings. The heating element 12 in this embodiment is installed near the side wall 11b in the furnace inner space 1s to surround the side peripheral surface of the placed fuel cell (W). A heating method of the heating furnace 1 is not limited to this, however, it may also be resistance heating (Joule heating) by electrifying the furnace body 11. In this case, the furnace body 11 is made of conductive metal.

The gas supply system 2 for power generation is used to supply gases required for power generation to the inside of the fuel cell (W). Concretely, the gas supply system 2 for power generation comprises a fuel electrode pipe 21 that supplies a gas such as H₂ gas to a fuel electrode w3 of the fuel cell (W), an air electrode pipe 22 that supplies a gas such as air to an air electrode w2 of the fuel cell (W), a temperature adjusting device 23 for power generation that heats or cools the gases flowing through each of the pipes 21, 22, and a flow rate control device for power generation, not shown in drawings, that controls flow rates of the gases flowing through each of the pipes 21, 22.

The temperature adjusting device 23 for power generation comprises one or both of a heater and a cooler and is configured to control the heater and/or the cooler in response to a control signal output from the control device 3 to adjust the temperatures of the gases flowing through each of the pipes 21, 22 to a predetermined temperature. In addition, the flow rate control device comprises, for example, a mass flow controller and a flow control valve, and is configured to adjust the gases flowing through each of the pipes 21, 22 to a predetermined flow rate in response to the control signal output from the control device 3.

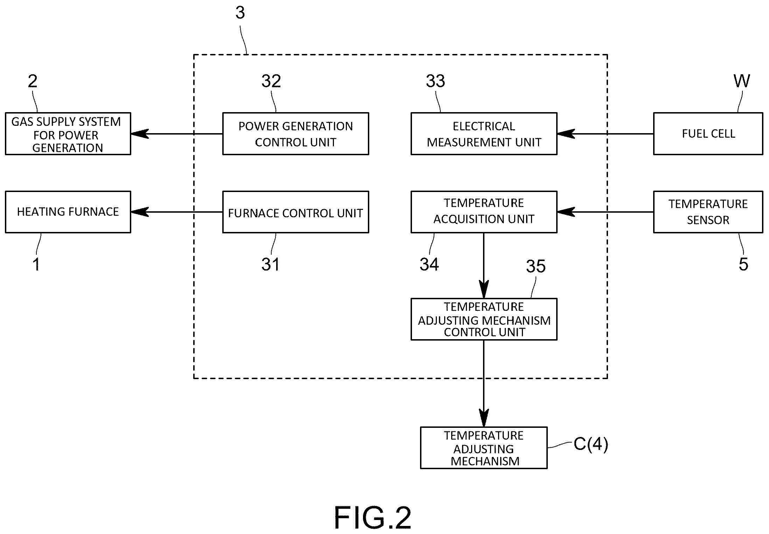

The control device 3 controls the environmental conditions of the fuel cell (W) and evaluates the characteristics of the fuel cell (W). Concretely, the control device 3 is a general-purpose or dedicated computer comprising a CPU, a memory, input/output interfaces and the like. By having the CPU and its peripherals work together according to a predetermined program stored in a predetermined area of the memory, the control device 3 performs at least functions as the control device 3 performs at least the following functions as shown in Fig. 2: a furnace control unit 31 for controlling the heating furnace 1, a power generation control unit 32 for controlling the power generation operation of the fuel cell (W), and an electrical measurement unit 33 for evaluating the electrical characteristics of the fuel cell (W).

The furnace control unit 31 controls the power supply circuit of the heating furnace 1 so that the temperature in the furnace inner space 1s becomes the predetermined test temperature. When the furnace control unit 31 controls the power supply circuit of the heating furnace 1, the evaluation device 100 can be switched among three operation modes: a temperature raising operation mode, a temperature maintaining mode and a temperature dropping operation mode.

The power generation control unit 32 controls the power generation operation of the fuel cell (W) by controlling the gas supply system 2 for power generation. Concretely, the power generation control unit 32 is configured to control the temperature, the flow rate and the pressure of the gas for power generation supplied to the air electrode w2 and the fuel electrode w3 of the fuel cell (W) by sending control signals to the temperature adjusting device 23 for power generation and a flow rate control device for power generation provided by the gas supply system 2 for power generation.

The electrical measurement unit 33 acquires a measurement signal from an electrical measurement device such as an impedance analyzer or a cell voltage monitor, not shown in drawings, connected to the fuel cell (W) and measures an electrical characteristic such as resistance, current or voltage of the fuel cell (W) in the temperature raising operation mode, the temperature maintaining mode and/or the temperature dropping operation mode.

The evaluation device 100 of this embodiment comprises a temperature adjusting mechanism (C) for promoting temperature raise and drop of the fuel cell (W) and its surroundings by heating and cooling the fuel cell (W) and its surroundings in the temperature raising operation mode and the temperature dropping operation mode. The control device 3 is configured to produce further functions as a temperature acquisition unit 34 for acquiring temperatures at a plurality of locations in the heating furnace 1 and a temperature control unit 35 for controlling the temperature adjusting mechanism (C).

The temperature adjusting mechanism (C) of this embodiment comprises a temperature adjusting fluid supply system 4 that supplies air, which is a temperature adjusting fluid that is heated or cooled and whose temperature is adjusted, to the furnace inner space 1s of the heating furnace 1. The temperature adjusting fluid supply system 4 supplies the temperature adjusting fluid from below to above in the furnace inner space 1s, and concretely comprises a temperature adjusting fluid pipe 41 that supplies the temperature adjusting fluid to the furnace inner space 1s, a temperature adjusting device 42 that heats or cools the temperature adjusting fluid flowing through the temperature adjusting fluid pipe 41, a flow rate control device (not shown in drawings) that controls the flow rate of the temperature adjusting fluid flowing through the temperature adjusting fluid pipe 41.

The temperature adjusting fluid pipe 41 is provided to penetrate, for example, the bottom wall 1 1a or the side wall 11b of the furnace body 11. An upstream end of the temperature adjusting fluid pipe 41 is connected to a gas source such as a gas cylinder and a downstream end thereof has a gas outlet port 4g for blowing out the air as the temperature adjusting fluid. The gas outlet port 4g is formed near an inner surface (a bottom surface) of the bottom wall 1 1a of the furnace body 11 and between the side surface of the placed fuel cell (W) and the heating element 12 arranged near the side wall 11b of the furnace body 11. The gas outlet port 4g is configured so that its direction is adjustable (changeable). In this embodiment, the gas outlet port 4g is open to face the heating element 12 of the heating furnace 1, and its direction is set so that the temperature adjusting fluid flowing through the temperature adjusting fluid pipe 41 is sprayed directly towards the heating element 12. In addition, the direction of the gas outlet port 4g is set so that the temperature adjusting fluid flowing through the temperature adjusting fluid pipe 41 is not sprayed directly on the side surface of the fuel cell (W). The gas outlet port 4g may be configured so that its direction can be automatically changed according to the temperature acquired by one or more of a plurality of temperature sensors 5 to be described later.

The temperature adjusting device 42 comprises one or both of a heater and a cooler and is configured to adjust the temperature adjusting fluid flowing through the temperature adjusting fluid pipe 41 to a predetermined temperature by controlling the heater and/or the cooler in response to a control signal output from the temperature adjusting mechanism control unit 35.

The flow control device comprises, for example, a mass flow controller or a flow control valve, and is configured to adjust the temperature adjusting fluid flowing through the temperature adjusting fluid pipe 41 to a predetermined flow rate in response to a control signal output from the temperature adjusting mechanism control unit 35.

The temperature acquisition unit 34 acquires a plurality of temperatures detected by a plurality of the temperature sensors 5 provided in the heating furnace 1. A plurality of the temperature sensors 5 comprise, for example, thermocouples, and are provided in the fuel cell (W) or its surroundings. A plurality of the temperature sensors 5 in this embodiment are provided, for example, near the surface of the fuel cell (W) and near the surface of the heating element 12 of the heating furnace 1, and the temperature acquisition unit 34 is configured to acquire the temperatures near the surface of the fuel cell (W) and near the surface of the heating element 12. The temperature sensors 5 may be provided inside the fuel cell (W). The temperature acquisition unit 34 may be configured to store temperature data linking one or more temperatures acquired from each of the temperature sensors 5 with an elapsed time or time in a predetermined memory unit set in the memory of the control unit 3.

The temperature adjusting mechanism control unit 35 of this embodiment controls one or both of the temperature and the flow rate of the temperature adjusting fluid supplied from the temperature adjusting fluid supply system 4 to the furnace inner space 1s by outputting and controlling control signals to one or both of the temperature adjusting device 42 and a fluid control device provided by the temperature adjusting fluid supply system 4. For example, the temperature adjusting mechanism control unit 35 controls the temperature adjusting fluid supply system 4 to supply the temperature adjusting fluid whose temperature is higher than the temperature of the furnace inner space 1s (for example, the lowest temperature in a plurality of the temperatures acquired by the temperature acquisition unit 34) in the temperature raising operation mode. In addition, the temperature adjusting mechanism control unit 35 also controls the temperature adjusting fluid supply system 4 to supply the temperature adjusting fluid whose temperature is lower than the temperature of the furnace inner space 1s (for example, the highest temperature in a plurality of the temperatures acquired by the temperature acquisition unit 34) in the temperature dropping operation mode. On the other hand, the temperature adjusting mechanism control unit 35 controls the temperature adjusting fluid supply system 4 so that an open/close valve provided in the temperature adjusting fluid supply system 4 is closed and no temperature adjusting fluid is supplied to the furnace inner space 1s in the temperature maintaining mode.

The temperature adjusting mechanism control unit 35 is configured to control one or both of the temperature and the flow rate of the temperature adjusting fluid supplied from the temperature adjusting fluid supply system 4 based on the temperature difference between the temperatures of a plurality of the locations acquired by the temperature acquisition unit 34 in the temperature raising operation mode and the temperature dropping operation mode. More concretely, in the temperature raising operation mode and the temperature dropping operation mode, the temperature adjusting mechanism control unit 35 is configured to calculate a temperature difference (ΔT) between two temperatures (for example, the temperatures (Ta) and (Tb) at two different points near the surface of the fuel cell (W), or the temperature (Ta) near the surface of the fuel cell (W) and the temperature (Tb) near the surface of the heating element 12) among a plurality of the temperatures acquired by the temperature acquisition unit 34. The temperature adjusting mechanism control unit 35 compares an absolute value of the temperature difference (ΔT) with a previously set predetermined value (Tx) and controls the temperature or the flow rate of the temperature adjusting fluid supplied from the temperature adjusting fluid supply system 4 to maintain the absolute value of the temperature difference (ΔT) smaller than or equal to the predetermined value (Tx). The predetermined value (Tx) is a value set sufficiently smaller than the temperature difference that causes cracks or other damage to the fuel cell (W) as the object to be evaluated (W).

Concretely, the temperature adjusting mechanism control unit 35 controls the temperature adjusting fluid supply system 4 to supply the temperature adjusting fluid whose temperature is higher than the temperature of the furnace inner space 1s while the furnace inner space 1s is being heated by the heating furnace 1 in the temperature raising operation mode. The temperature adjusting mechanism control unit 35 calculates the temperature difference (ΔT) between the two temperatures (Ta) and (Tb) acquired by the temperature acquisition unit 34 on a constant basis. In case that the absolute value of the temperature difference (ΔT) exceeds the predetermined value (Tx), one or both of the temperature and the flow rate of the temperature adjusting fluid supplied from the temperature adjusting fluid supply system 4 is controlled so as to make the absolute value of the temperature difference (ΔT) smaller than or equal to the predetermined value (Tx).

On the other hand, the temperature adjusting mechanism control unit 35 controls the temperature adjusting fluid supply system 4 to supply the temperature adjusting fluid whose temperature is lower than the temperature of the furnace inner space 1s while heating the furnace inner space 1s by the heating furnace 1 is stopped in the temperature dropping operation mode. The temperature adjusting mechanism control unit 35 calculates the temperature difference (ΔT) between the two temperatures (Ta) and (Tb) acquired by the temperature acquisition unit 34. In case that the absolute value of the temperature difference (ΔT) exceeds the predetermined value (Tx), one or both of the temperature and the flow rate of the temperature adjusting fluid supplied from the temperature adjusting fluid supply system 4 is controlled so as to make the absolute value of the temperature difference (ΔT) smaller than or equal to the predetermined value (Tx). In the temperature dropping operation mode, since the junction of dissimilar materials is easily damaged by the temperature difference, it is preferable that one or more temperature sensors 5 are installed near a junction part of the dissimilar materials on the surface or inside of the object to be evaluated (W).

In accordance with the evaluation device 100 of this embodiment having the above-mentioned arrangement, since the temperature adjusting mechanism (C) is provided to heat or cool the object to be evaluated (W) or its surroundings, it is possible to shorten the time to raise the temperature or the time to drop the temperature by heating or cooling the object to be evaluated (W) or its surroundings by the temperature adjusting mechanism (C) at a time of raising the temperature or at a time of dropping the temperature in the heating furnace 1. This can improve the test operation rate. Furthermore, since the temperatures of several points in the object to be evaluated (W) or its surroundings are acquired and the temperature adjusting mechanism (C) is controlled so as not to make the temperature difference too big, it is possible to suppress damage to the object to be evaluated (W) caused by the temperature difference in the heating furnace 1.

Furthermore, since the direction of the gas outlet port 4g is set so that the temperature adjusting fluid supplied from the temperature adjusting fluid supply system 4 is directly sprayed on the heating element 12 of the furnace 1, it is possible to effectively cool the furnace inner space 1s during dropping the temperature. In addition, since the direction of the gas outlet port 4g is set so that the temperature adjusting fluid is not directly sprayed on the evaluation device 100 housed in the furnace inner space 1s, it is possible to effectively suppress damage to the object to be evaluated (W) due to temperature differences at a time of raising the temperature and at a time of dropping the temperature.

This invention is not limited to the above-mentioned embodiments.

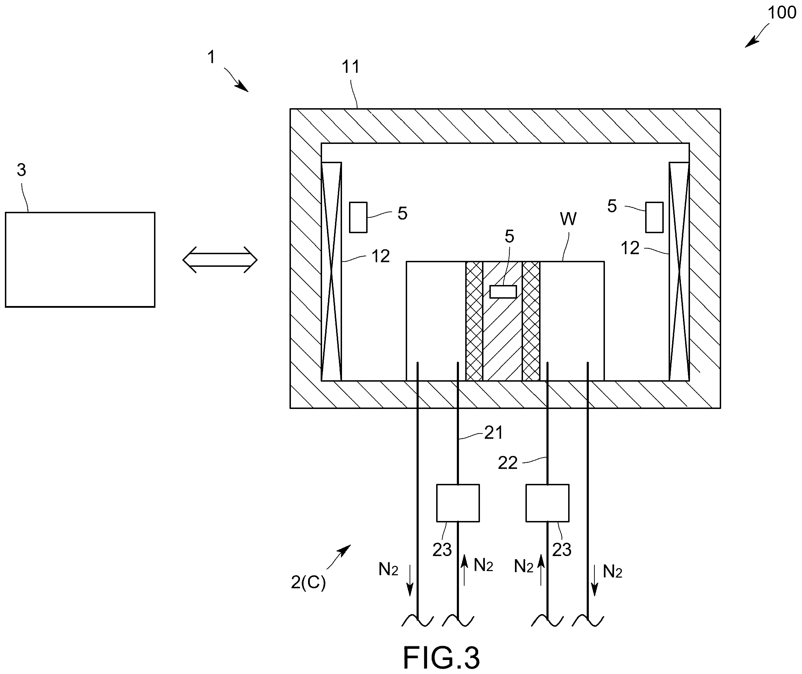

For example, in the evaluation device 100 of the above-mentioned embodiment, the temperature adjusting mechanism (C) is configured using the temperature adjusting fluid supply system 4, however, it is not limited to this. As shown in Fig. 3, the temperature adjusting mechanism (C) of the other embodiment may be configured using the gas supply system 2 for power generation. In this case, the temperature adjusting mechanism (C) may be configured to promote raising the temperature and dropping the temperature of the fuel cell (W) and its surroundings by using the gas supply system 2 for power generation to supply the temperature adjusting fluid, whose temperature is adjusted by heating or cooling, to the inside of the fuel cell (W). In this embodiment, the gas supply system 2 for power generation may be configured to supply the temperature adjusting fluid to the fuel electrode w3 through the pipe 21 for the fuel electrode and to supply the temperature adjusting fluid to the air electrode w2 through the pipe 22 for the air electrode. In this embodiment, the temperature adjusting mechanism control unit 35 may control the temperature adjusting device 23 for power generation and the flow control device for power generation to promote heating and cooling of the fuel cell (W) by controlling one or both of the temperature and the flow rate of the temperature adjusting fluid supplied to the fuel electrode w3 and the air electrode w2. The temperature adjusting fluid supplied to the fuel cell (W) using the gas supply system 2 for power generation may be an inert gas such as a nitrogen gas, a gas such as air and water vapor, a liquid such as water and a gas-liquid mixture thereof.

In the embodiment of Fig. 3, a plurality of the temperature sensors 5 may be provided at least inside the fuel cell (W) and near the surface of the heating element 12 of the heating furnace 1, and the temperature acquisition unit 34 may be configured to acquire at least the temperature inside the fuel cell (W) and near the surface of the heating element 12. And the temperature adjusting mechanism control unit 35 may be configured to compare the absolute value of the temperature difference (ΔT) between the internal temperature of the fuel cell (W) and the temperature near the surface of the heating element 12 with the predetermined value (Tx), and to control the temperature or the flow rate of the temperature adjusting fluid supplied into the fuel cell (W) to keep the absolute value of the temperature difference (ΔT) lower than or equal to the predetermined value (Tx).

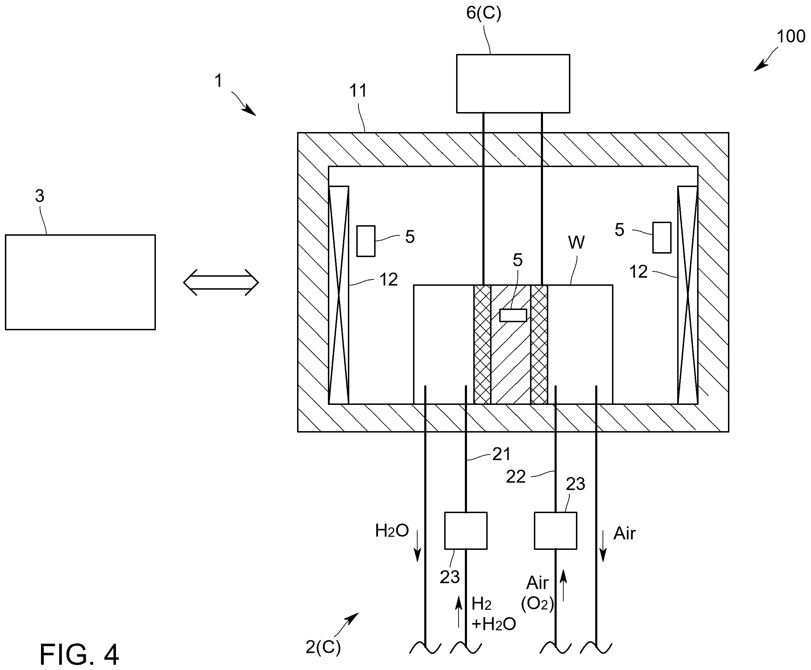

In addition, the temperature adjusting mechanism (C) of the other embodiment may be configured to promote raising and dropping the temperature of the fuel cell (W) and its surroundings by making use of an exothermic reaction and an endothermic reaction of the fuel cell (W). Concretely, as shown in Fig. 4, the temperature adjusting mechanism (C) of this embodiment is configured using the gas supply system 2 for power generation and a power supply circuit 6 for applying voltage to the fuel cell (W), and the power generation control unit 32 functions as the temperature adjusting mechanism control unit 35. The gas supply system 2 for power generation in this embodiment is configured so that water can be supplied to the air electrode w2 and the fuel electrode w3 of the fuel cell (W).

In this embodiment, in the temperature raising operation mode, the power generation control unit 32, which is the temperature adjusting mechanism control unit 35, controls the gas supply system 2 for power generation to operate the fuel cell (W) to generate power, and applies heat to the fuel cell (W) by the exothermic reaction generated thereby. The temperature adjusting mechanism control unit 35 may be configured to compare the absolute value of the temperature difference (ΔT) between the internal temperature of the fuel cell (W) and the temperature near the surface of the heating element 12 obtained by the temperature acquisition unit 34 with the predetermined value (Tx), and to control the flow rate of the gas for power generation supplied into the fuel cell (W) to keep the absolute value of the temperature difference (ΔT) smaller than or equal to the predetermined value (Tx).

On the other hand, in the temperature dropping operation mode, the power generation control unit 32, which is the temperature adjusting mechanism control unit 35, controls the gas supply system 2 for power generation to supply water to the air electrode w2 and the fuel electrode w3 of the fuel cell (W) and controls the power supply circuit 6 to apply voltage to the fuel cell (W). This causes a water electrolysis in the fuel cell (W) and the fuel cell (W) is cooled by the endothermic reaction generated thereby. The temperature adjusting mechanism control unit 35 may be configured to compare the absolute value of the temperature difference (ΔT) between the internal temperature of the fuel cell (W) and the temperature near the surface of the heating element 12 acquired by the temperature acquisition unit 34 with the predetermined value (Tx), and to control the voltage value applied to the fuel cell (W) to keep the absolute value of the temperature difference (ΔT) smaller than or equal to the predetermined value (Tx).

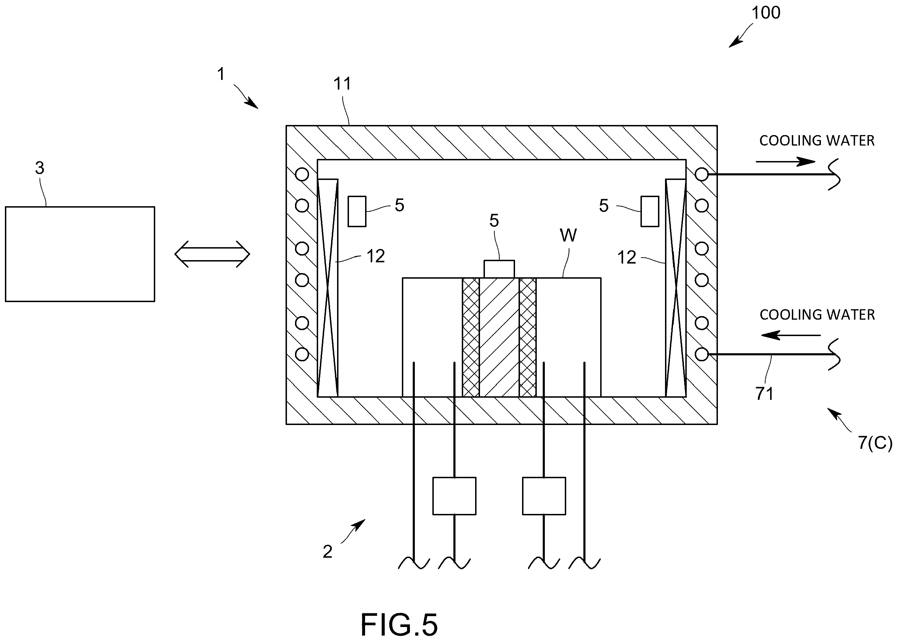

In addition, the evaluation device 100 of the other embodiment may comprise a water cooling mechanism 7 that cools the furnace body 11 by water cooling, as shown in Fig. 5, and the temperature adjusting mechanism (C) may be configured using the water cooling mechanism 7. In this case, the temperature adjusting mechanism (C) functions to promote cooling around the fuel cell (W) in the temperature dropping operation mode. Concretely, the water cooling mechanism 7 comprises a water cooling pipe 71 through which a cooling medium such as cooling water flows, and a chiller, not shown in drawings, which supplies cooling water to the water cooling pipe 71. The water cooling pipe 71 may be provided, for example, to penetrate the side wall 11b of the furnace body 11.

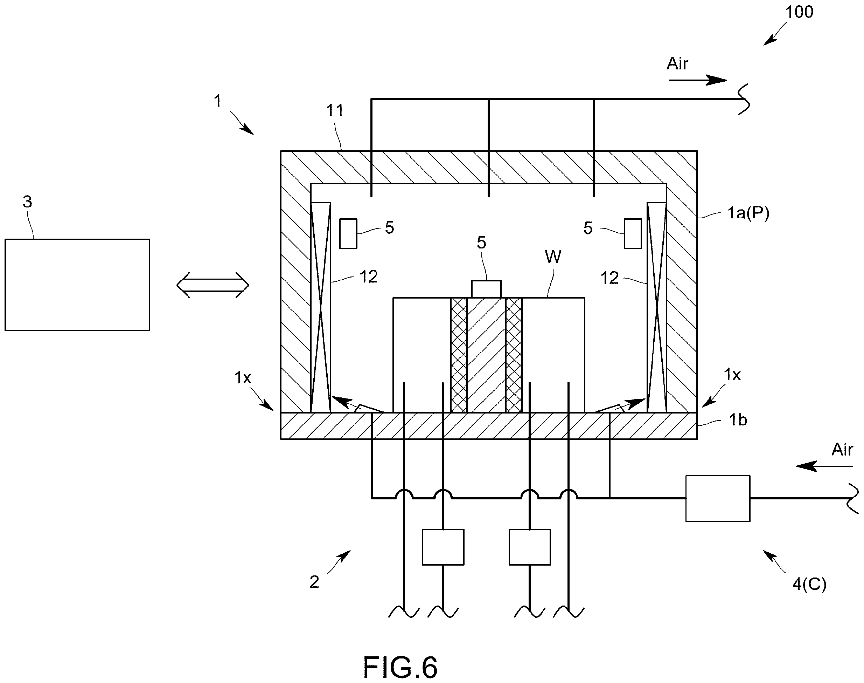

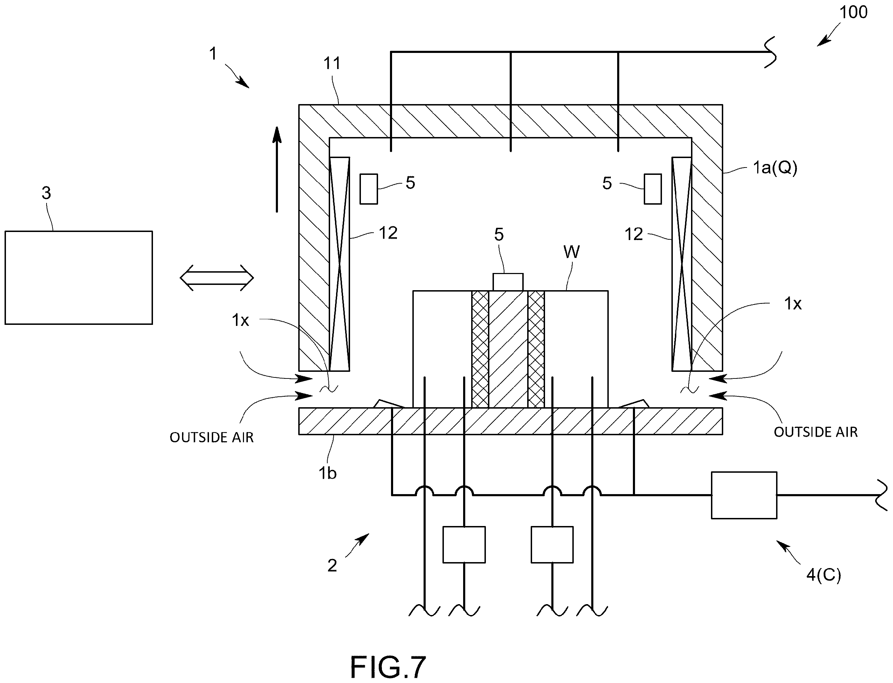

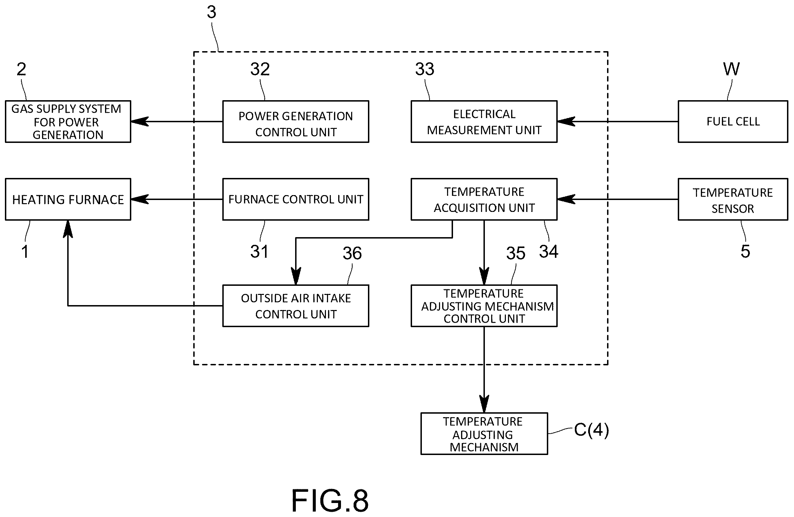

In addition, in the other embodiment of the evaluation device 100, for example as shown in Fig. 6 through Fig. 8, the heating furnace 1 may have an openable/closeable outside air intake port 1x for taking the outside air into the furnace inner space 1s, and the control device 3 may further function as an outside air intake control unit 36 that controls an open/close state of the outside air intake port 1x. In this embodiment, as shown in Fig. 6 and Fig. 7, the furnace body 11 of the heating furnace 1 has a base unit 1b comprising a bottom wall 11a and a cover unit 1a comprising a top wall 11c and side walls 11b and covering the fuel cell (W) placed on the base unit 1b. The heating furnace 1 has an elevating mechanism (not shown in drawings) for moving the cover unit 1a up and down with respect to the base unit 1b. The elevating mechanism moves the cover unit 1a between a sealed position (P) where the cover unit 1a contacts the base unit 1b and the furnace inner space 1s is sealed and an open position (Q) where the cover unit 1a is separated from the base unit 1b and the furnace inner space 1s is open by moving the cover unit 1a up and down in response to a control signal output from the control unit 3. In this embodiment, a gap formed between the cover unit 1a and the base unit 1b, which are separated from each other, forms the above-mentioned outside air intake port 1x.

In the evaluation device 100 of this embodiment, when the temperature of the object to be evaluated (W) becomes equal to or lower than the predetermined value (Ti) in the temperature dropping operation mode, the outside air intake port 1x in the closed state is automatically switched to the open state. Concretely, in the temperature dropping operation mode, the outside air intake control unit 36 is configured to compare the temperature (Te) of the object to be evaluated (W) acquired by the temperature acquisition unit 34 with a predetermined set temperature (Ti) (hereinafter referred to as an outside air intake temperature (Ti)). When the temperature (Te) of the object to be evaluated (W) becomes equal to or lower than the outside air intake temperature (Ti), the outside air intake control unit 36 outputs a control signal to the elevating mechanism to move the cover unit 1a up and down from the sealed position (P) to the open position (Q). As a result of this, the outside air is taken into the furnace inner space 1s through the outside air intake port 1x formed between the cover unit 1a and the base unit 1b to promote cooling of the evaluation device 100. The outside air intake temperature (Ti) is a temperature set with reference to the spontaneous combustion temperature of the evaluation device 100, and more concretely, is lower than the spontaneous combustion temperature of the evaluation device 100 and higher than the temperature at which the fuel cell (W) can be taken out.

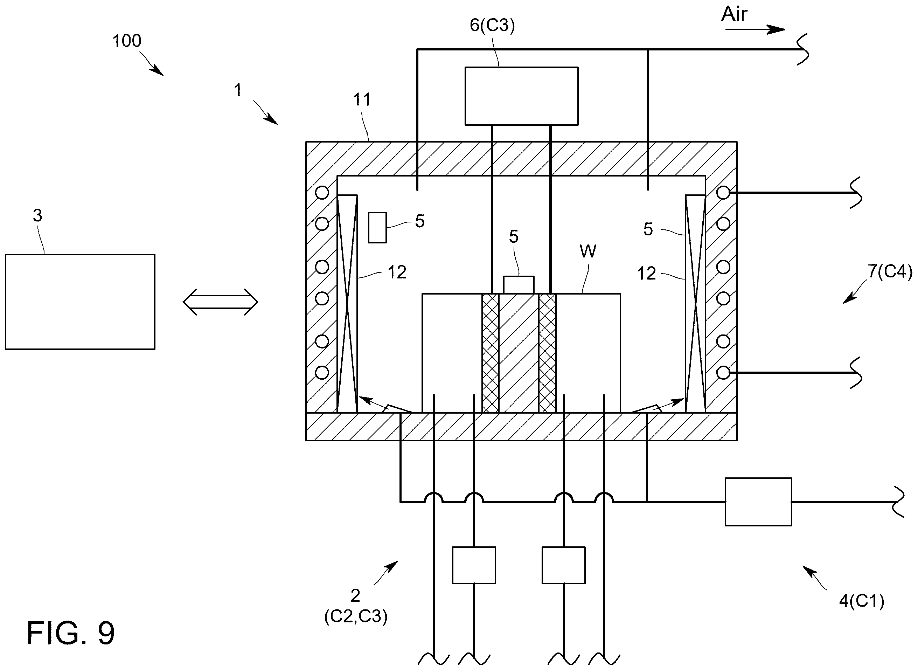

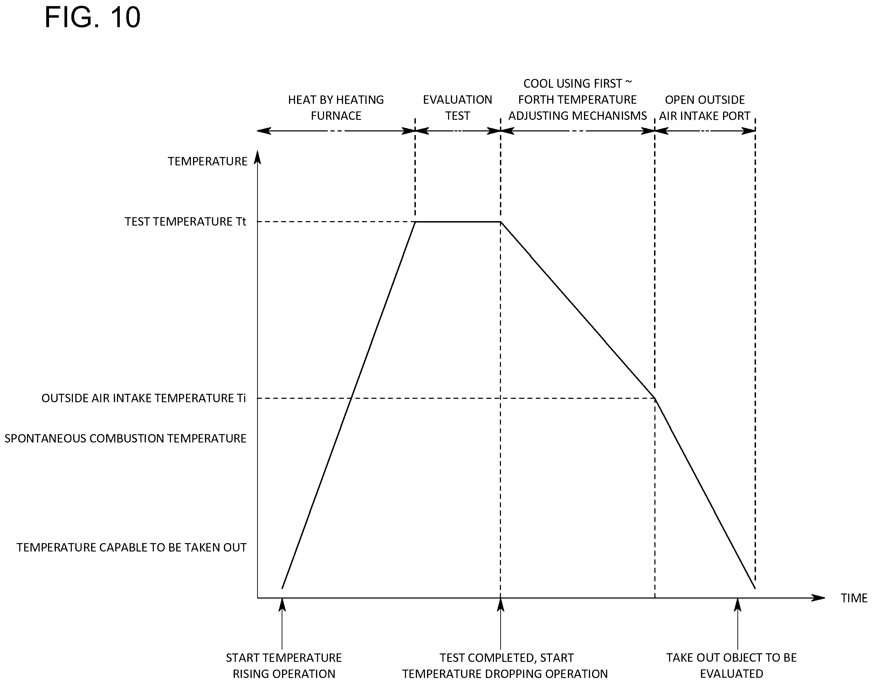

In addition, the evaluation device 100 of the other embodiment may have a plurality of temperature adjusting mechanisms (C) of mutually different method. For example, as shown in Fig. 9, the evaluation device 100 of the other embodiment may be provided with a plurality of the temperature adjusting mechanisms (C) in combination with two or more temperature adjusting mechanisms selected from a first temperature adjusting mechanism C1 using the temperature adjusting fluid supply system 4, a second temperature adjusting mechanism C2 using the gas supply system 2 for power generation, a third temperature adjusting mechanism C3 using the exothermic reaction and the endothermic reaction of the fuel cell (W) and a fourth temperature adjusting mechanism C4 using the water cooling mechanism 7. The temperature adjusting mechanism control unit 35 may be configured to promote heating or cooling the fuel cell (W) by using a part or all of the mechanisms selected among a plurality of the temperature adjusting mechanisms C1 through C4 in the temperature raising operation mode and the temperature dropping operation mode. For example, as shown in Fig. 10, in a process of dropping the temperature by switching the heating furnace 1 to the temperature dropping operation mode to drop the temperature, after the evaluation test is conducted on the fuel cell (W) at a predetermined test temperature (Tt) with the heating furnace 1 kept in the temperature maintaining mode, while the temperature (Te) of the fuel cell (W) is lower than or equal to the test temperature (Tt) and higher than or equal to the outside air intake temperature (Ti), one or some of the mechanisms selected among the first temperature adjusting mechanism C1 through the fourth temperature control the mechanisms C4 may be used to promote cooling the fuel cell (W). When the temperature (Te) of the fuel cell (W) becomes equal to or lower than the outside air intake temperature (Ti), the cooling by the first temperature adjusting mechanism C1 through the fourth temperature adjusting mechanism C4 may be stopped and the cover unit 1a of the evaluation device 100 may be moved to open the outside air intake port 1x to bring in the outside air into the furnace inner space 1s to cool the fuel cell (W). The outside air intake port 1x may be comprised by an outlet port for taking out the object to be evaluated (W).

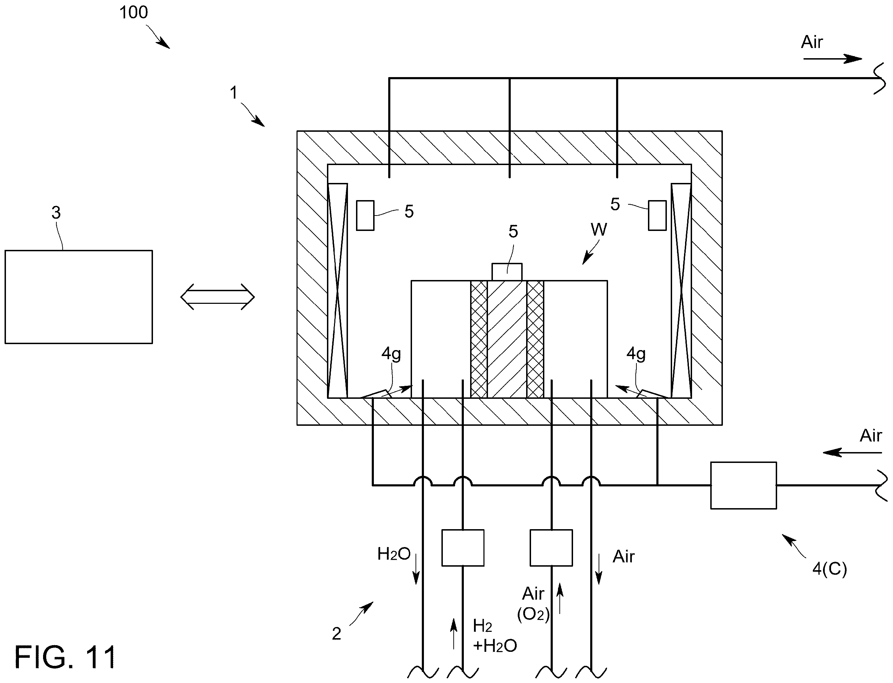

In addition, in the evaluation device 100 of the above-mentioned embodiment, the gas outlet port 4g provided by the temperature adjusting fluid supply mechanism is open to face the side wall 11b surface of the furnace body 11, however, it is not limited to this. In the evaluation device 100 of the other embodiment, as shown in Fig. 11, the gas outlet port 4g provided by the temperature adjusting fluid supply mechanism may be oriented so that the temperature adjusting gas is directly sprayed on the side surface of the fuel cell (W). The gas outlet port 4g may also be set in such a direction that the gas outlet port 4g sprays the temperature adjusting gas upward.

In the above-mentioned embodiment, from the viewpoint of preventing hydrogen leakage, the temperature adjusting fluid supply system 4 is configured to supply the temperature adjusting fluid from below to upward in the furnace inner space 1s, however, it is not limited to this. In the other embodiment, the temperature adjusting fluid supply system 4 may be configured to supply the temperature adjusting fluid from above to below in the furnace inner space 1s.

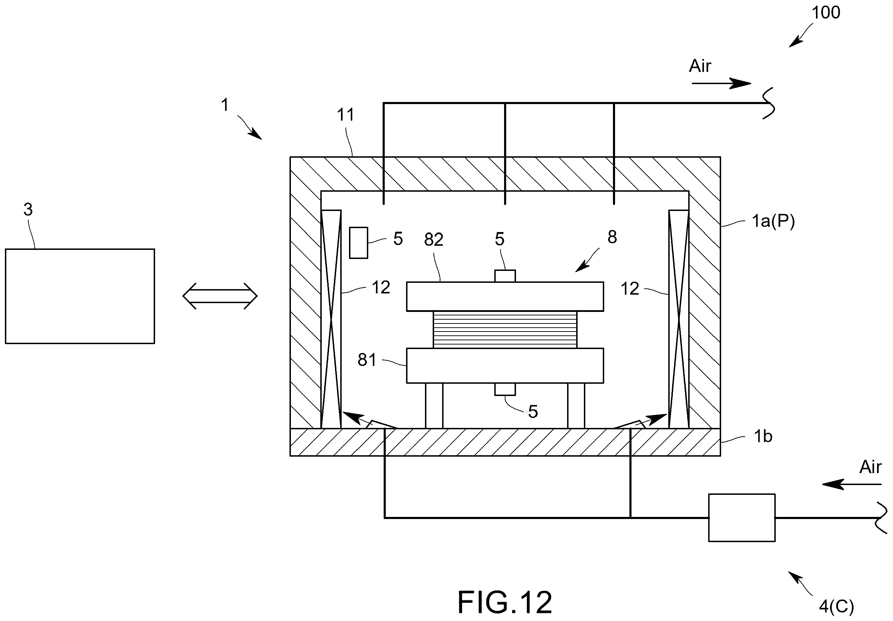

In the above-mentioned embodiment, the fuel cell (W) as the object to be evaluated (W) consist of a single cell comprising a solid electrolyte w1, an air electrode w2 (cathode) and a fuel electrode w3 (anode), however, it is not limited to this. In the other embodiment, as shown in Fig. 12, the fuel cell (W) may comprise a stack of a plurality of single cells. In addition, the evaluation device 100 of the other embodiment may also have a holding stand 8 that holds the fuel cell (W) in the furnace inner space 1s in a state that the fuel cell (W) is sandwiched, as shown in Fig. 12. The holding stand 8 may have a base plate 81 on which the fuel cell (W) is placed and an upper plate 82 that holds the upper surface of the placed fuel cell (W). In this case, the temperature acquisition unit 34 may acquire the temperatures (for example, the temperatures of the top and the bottom of the fuel cell (W)) detected by a plurality of the temperature sensors 5 provided on the holding stand 8, and the temperature control unit 35 may control the temperature adjusting mechanism (C) based on the temperature difference between the top temperature and the bottom temperature of the fuel cell (W).

In addition, a plurality of the temperature sensors 5 in the heating furnace 1 may be provided at any arbitrary location, not only limited to near the surface of the fuel cell (W), inside the fuel cell (W) and near the surface of the heating element 12.

In the above-mentioned embodiment, the object to be evaluated (W) is the fuel cell (W), however, it is not limited to this. The object to be evaluated (W) in the other embodiment may be, for example, a catalyst arranged in an exhaust pipe of a vehicle, or various sensors such as an A/F sensor or O₂ sensor that detects a component in an exhaust gas. In other words, the present claimed invention is applicable to the evaluation device 100 for evaluating the performance of various sensors, catalysts or a combination of the sensors and catalysts as well as the evaluation device 100 for the fuel cell (W).

It goes without saying that the present claimed invention is not limited to the above-mentioned embodiments and may be variously modified or combined without departing from a spirit of the present claimed invention.

### Possible applications in industry

In accordance with the present claimed invention, it is possible for the evaluation device that evaluates performance of an object to be evaluated such as a fuel cell by varying the temperature conditions to improve an operation rate of an evaluation test while suppressing damage to the object to be evaluated caused by temperature differences.

### Explanation of codes

- 100: evaluation device
- 1: heating furnace
- 1s: furnace inner space
- 11: furnace body
- 11a: bottom wall
- 11b: side wall
- 12: heating element
- 2: gas supply system for power generation
- 21: pipe for fuel electrode
- 22: pipe for air electrode
- 23: temperature adjusting device for power generation
- 3: control unit
- 34: temperature acquisition unit
- 35: temperature adjusting mechanism control unit
- 4: temperature adjusting fluid supply system
- 41: pipe for temperature adjusting fluid
- 42: temperature adjusting device
- 5: temperature sensor
- C: temperature adjusting mechanism
- W: object to be evaluated

## Claims

1. An evaluation device for evaluating performance of a predetermined object to be evaluated by varying a temperature condition, comprising
a heating furnace having a furnace inner space that houses the object to be evaluated,
a temperature adjusting mechanism that adjusts a temperature of the object to be evaluated or its surroundings by heating or cooling,
a temperature acquisition unit that acquires the temperatures of a plurality of locations of the object to be evaluated or its surroundings, and
a temperature adjusting mechanism control unit that controls the temperature adjusting mechanism to keep an absolute value of a temperature difference between the temperatures of a plurality of the locations acquired by the temperature acquisition unit lower than or equal to a predetermined value.

2. The evaluation device described in claim 1, wherein
the temperature adjusting mechanism control unit controls the temperature adjusting mechanism based on a temperature difference between the highest temperature and the lowest temperature of a plurality of the temperatures obtained by the temperature acquisition unit.

3. The evaluation device described in claim 1 or claim 2, wherein
the temperature adjusting mechanism comprises an outlet port that supplies a temperature adjusting fluid that promotes heating or cooling of the object to be evaluated to the furnace inner space.

4. The evaluation device described in claim 3, wherein
the heating furnace comprises a heating element in the furnace inner space, and
a direction of the outlet port can be set so that the temperature adjusting fluid is sprayed directly on the heating element.

5. The evaluation device described in claim 3 or claim 4, wherein
the direction of the outlet port can be set so that the temperature adjusting fluid is not directly sprayed on the object to be evaluated housed in the furnace inner space.

6. The evaluation device described in either one of claim 3 through 5, wherein
the evaluation device has a temperature raising operation mode in which the furnace inner space is heated to raise the temperature in the furnace inner space, and
in the temperature raising operation mode, the temperature adjusting mechanism control unit controls the temperature adjusting mechanism to supply the temperature adjusting fluid whose temperature is higher than the temperature in the furnace inner space.

7. The evaluation device described in either one of claim 3 through claim 6, wherein
the evaluation device has a temperature dropping operation mode in which the furnace inner space is cooled and to drop the temperature in the furnace inner space, and
in the temperature dropping operation mode, the temperature adjusting mechanism control unit controls the temperature adjusting mechanism to supply the temperature adjusting fluid whose temperature is lower than the temperature in the furnace inner space.

8. The evaluation device described in claim 7, wherein
the heating furnace has an outside air intake port that can be open and close for taking outside air into the furnace inner space, and
in the temperature dropping operation mode, when the temperature of the object to be evaluated falls below a predetermined set temperature, the outside air intake port is automatically opened to allow the outside air to be taken into the furnace inner space.

9. The evaluation device described in either on of claim 1 through claim 8, wherein
the object to be evaluated is a fuel cell, a catalyst or a sensor.

10. An evaluation method that evaluates an object to be evaluated by using an evaluation device that evaluates performance of the predetermined object to be evaluated by varying a temperature condition and that comprises a heating furnace having a furnace inner space to house the object to be evaluated and a temperature adjusting mechanism to heat or cool the object to be evaluated or its surroundings, wherein
the temperatures of a plurality of locations in or around the object to be evaluated are acquired, and
the temperature adjusting mechanism is controlled to keep an absolute value of a temperature difference between the acquired temperatures at a plurality of the locations lower than or equal to a predetermined value.

11. A program for evaluation device that evaluates performance of a predetermined object to be evaluated by varying a temperature condition and that comprises a heating furnace having a furnace inner space to house the object to be evaluated and a temperature adjusting mechanism to adjust the object to be evaluated or its surroundings by heating or cooling the object to be evaluated or its surroundings, wherein making a computer produce functions as
a temperature acquisition unit that acquires the temperatures of a plurality of locations in or around the object to be evaluated, and
a temperature adjusting mechanism control unit that controls the temperature adjusting mechanism to keep an absolute value of a temperature difference between the acquired temperatures at a plurality of the locations lower than or equal to a predetermined value.
